# EUROPEAN PATENT APPLICATION

(11) **EP 4 661 549 A1**
(43) Date of publication of application: **10.12.2025**
(21) Application number: 23918938.4
(22) Date of filing: 30.01.2023
(51) Int. Cl.: H04W 72/20

(54) **WIRELESS COMMUNICATION METHOD AND APPARATUS, DEVICE, STORAGE MEDIUM, AND PROGRAM PRODUCT**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/073782
(87) International publication number: WO 2024/159348

(57) **Abstract**

A wireless communication method and apparatus, a device, a storage medium, and a program product, relating to the technical field of communications. The method comprises: a terminal device sends first signaling to a network device, wherein the first signaling comprises a media access control control element (MAC CE), the MAC CE is used for indicating a GNSS validity duration of positioning information of the terminal device, and the identity of the first signaling comprises at least one of the following: a logical channel identify (LCID); and an enhanced logical channel identify (eLCID). By means of the method, a network device can learn about the GNSS validity duration of the positioning information of a terminal device, so as to avoid a link failure between the network device and the terminal device caused by outdating of the positioning information of the terminal device. The stability of a link between the network device and the terminal device is ensured, thereby ensuring the stability of information transmission.

## Description

### TECHNICAL FIELD

The embodiments of the disclosure relate to the field of communication technology, in particular to a wireless communication method, an apparatus, a device, a storage medium and a program product.

### BACKGROUND

In the non-terrestrial network (NTN), some Internet of Things (IOT) terminals cannot support simultaneous global navigation satellite system (GNSS) reception and long term evolution (LTE) transmission/reception. However, a validity of GNSS position fix obtained by the terminal can only be maintained for a certain period of time. Beyond this period, the GNSS of the terminal becomes outdates, and the terminal needs to reacquire GNSS. Since the terminal cannot support simultaneous GNSS reception and LTE transmission/reception, only one of them can be performed. After GNSS outdated, the terminal returns to an idle state.

In order to prevent the terminal from returning to the idle state after GNSS outdated, the terminal reports a GNSS validity duration via a media access control control element (MAC CE). However, the specific configuration of MAC CE needs to be further discussed and researched.

### SUMMARY

The embodiments of the disclosure provide a wireless communication method, an apparatus, a device, a storage medium and a program product. The technical solutions are described below.

According to a first aspect of embodiments of the disclosure, a wireless communication method is provided. The method is performed by a terminal, and includes:

sending a first signaling to a network device, in which the first signaling includes a MAC CE, the MAC CE indicates a GNSS validity duration of positioning information of the terminal, and an ID of the first signaling includes at least one of:
a logical channel ID (LCID); or
an enhanced LCID (eLCID).

In some embodiments, the ID of the first signaling is the LCID, and is one LCID selected from an LCID reserved pool including at least one LCID.

In some embodiments, the ID of the first signaling is the eLCID, and is one eLCID selected from an eLCID reserved pool including at least one eLCID.

In some embodiments, the first signaling includes a sub header, and the sub header carries the ID of the first signaling.

In some embodiments, the first signaling includes a sub protocol data unit (PDU), and the sub PDU carries the GNSS validity duration.

In some embodiments, a size of the sub PDU is one byte.

In some embodiments, the GNSS validity duration is represented by at least 4 bits.

In some embodiments, a size of the sub PDU is two bytes.

In some embodiments, the GNSS validity duration is represented by at least 8 bits.

In some embodiments, there is a mapping relationship between the GNSS validity duration indicated by the first signaling and an actual GNSS validity duration, and the actual GNSS validity duration is an actual validity duration of the positioning information.

In some embodiments, an actual GNSS validity duration is a product of the GNSS validity duration indicated by the first signaling and a first value, and the actual GNSS validity duration is an actual validity duration of the positioning information.

In some embodiments, the first signaling indicates the GNSS validity duration in one of the following ways:
indicating the GNSS validity duration in minutes;
indicating the GNSS validity duration in seconds; and
indicating the GNSS validity duration in milliseconds.

In some embodiments, a second part of the GNSS validity duration is indicated by M bits in the first signaling, and a minute part of the GNSS validity duration is indicated by N bits in the first signaling, where M and N are positive integers..

In some embodiments, the M bits indicate the second part of the GNSS validity duration in steps of integer seconds;
or,
the M bits indicate the second part of the GNSS validity duration in steps of fractional seconds.

In some embodiments, the N bits indicate the minute part of the GNSS validity duration in steps of integer minutes;
or,
the N bits indicate the minute part of the GNSS validity duration in steps of fractional minutes.

According to a second aspect of embodiments of the disclosure, a wireless communication method is provided. The method is performed by a network device, and includes:
receiving a first signaling from a terminal, in which the first signaling includes a MAC CE, the MAC CE indicates a GNSS validity duration of positioning information of the terminal, and an ID of the first signaling includes at least one of:
an LCID; or
an eLCID.

In some embodiments, the ID of the first signaling is the LCID, and is one LCID selected from an LCID reserved pool including at least one LCID.

In some embodiments, the ID of the first signaling is the eLCID, and is one eLCID selected from an eLCID reserved pool including at least one eLCID.

In some embodiments, the first signaling includes a sub header, and the sub header carries the ID of the first signaling.

In some embodiments, the first signaling includes a sub PDU, and the sub PDU carries the GNSS validity duration.

In some embodiments, a size of the sub PDU is one byte.

In some embodiments, the GNSS validity duration is represented by at least 4 bits.

In some embodiments, a size of the sub PDU is two bytes.

In some embodiments, the GNSS validity duration is represented by at least 8 bits.

In some embodiments, there is a mapping relationship between the GNSS validity duration indicated by the first signaling and an actual GNSS validity duration, and the actual GNSS validity duration is an actual validity duration of the positioning information.

In some embodiments, an actual GNSS validity duration is a product of the GNSS validity duration indicated by the first signaling and a first value, and the actual GNSS validity duration is an actual validity duration of the positioning information.

In some embodiments, the first signaling indicates the GNSS validity duration in one of the following ways:
indicating the GNSS validity duration in minutes;
indicating the GNSS validity duration in seconds; and
indicating the GNSS validity duration in milliseconds.

In some embodiments, a second part of the GNSS validity duration is indicated by M bits in the first signaling, and a minute part of the GNSS validity duration is indicated by N bits in the first signaling, where M and N are positive integers..

In some embodiments, the M bits indicate the second part of the GNSS validity duration in steps of integer seconds;
or,
the M bits indicate the second part of the GNSS validity duration in steps of fractional seconds.

In some embodiments, the N bits indicate the minute part of the GNSS validity duration in steps of integer minutes;
or,
the N bits indicate the minute part of the GNSS validity duration in steps of fractional minutes.

According to a third aspect of embodiments of the disclosure, a wireless communication apparatus is provided. The apparatus includes:
a sending module, configured to send a first signaling to a network device, in which the first signaling includes a MAC CE, the MAC CE indicates a GNSS validity duration of positioning information of the terminal, and an ID of the first signaling includes at least one of:
an LCID; or
an eLCID.

According to a fourth aspect of embodiments of the disclosure, a wireless communication apparatus is provided. The apparatus includes:
a receiving module, configured to receive a first signaling from a terminal, in which the first signaling includes a MAC CE, the MAC CE indicates a GNSS validity duration of positioning information of the terminal, and an ID of the first signaling includes at least one of:
an LCID; or
an eLCID.

According to a fifth aspect of embodiments of the disclosure, a communication device is provided. The communication device includes: a processor and a memory. The memory stores a computer program, and the processor implements the wireless communication method on the terminal side or the wireless communication method on the network device side by executing the computer program. Exemplarily, the communication device is a terminal or a network device.

According to a sixth aspect of embodiments of the disclosure, a computer readable storage medium is provided. The storage medium stores a computer program, and when the computer program is executed by a processor, the wireless communication method on the terminal side or the wireless communication method on the network device side is implemented.

According to a seventh aspect of embodiments of the disclosure, a chip is provided. The chip includes: a programmable logic circuit and/or a program instruction. When the chip is running, the wireless communication method on the terminal side or the wireless communication method on the network device side is implemented.

According to an eighth aspect of embodiments of the disclosure, a computer program product is provided. The computer program product includes a computer program, the computer program is stored in a computer readable storage medium, and a processor reads the computer program from the computer readable storage medium and executes the computer program to realize the wireless communication method on the terminal side or the wireless communication method on the network device side.

According to a ninth aspect of embodiments of the disclosure, a communication system is provided. The communication system includes: a terminal and a network device. The terminal is configured to implement the wireless communication method on the terminal side, and the network device is configured to implement the wireless communication method on the network device side.

The technical solutions provided by the embodiments of the disclosure may include the following beneficial effects.

By taking the LCID or the eLCID as the ID of the first signaling, the GNSS validity duration of the positioning information of the terminal is indicated to the network device via the first signaling, which enables the network device to obtain the GNSS validity duration of the positioning information of the terminal, so as to prevent a link failure between the network device and the terminal caused by outdating of the positioning information of the terminal, thereby ensuring a stability of links between the network device and the terminal and further ensuring a stability of information transmission.

### BRIEF DESCRIPTION OF THE DRAWINGS

FIG. 1 is a schematic diagram of a network architecture according to an embodiment of the disclosure.
FIG. 2 is a schematic diagram of a network architecture according to another embodiment of the disclosure.
FIG. 3 is a schematic diagram of a network architecture according to yet another embodiment of the disclosure.
FIG. 4 is a schematic diagram of an NTN architecture according to an embodiment of the disclosure.
FIG. 5 is a schematic diagram of a transparent transmission mode according to an embodiment of the disclosure.
FIG. 6 is a schematic diagram of a regeneration mode according to an embodiment of the disclosure.
FIG. 7 is a flowchart of a wireless communication method according to an embodiment of the disclosure.
FIG. 8 is a schematic diagram of a sub PDU according to an embodiment of the disclosure.
FIG. 9 is a schematic diagram of a sub PDU according to another embodiment of the disclosure.
FIG. 10 is a block diagram of a wireless communication apparatus according to an embodiment of the disclosure.
FIG. 11 is a block diagram of a wireless communication apparatus according to another embodiment of the disclosure.
FIG. 12 is a schematic diagram of a communication device according to an embodiment of the disclosure.

### DETAILED DESCRIPTION

In order to make the objectives, technical solutions and advantages of the disclosure more clear, the implementations of the disclosure will be further described in detail below with reference to the accompanying drawings.

The network architectures and service scenarios described in the embodiments of the disclosure are intended to more clearly explain the technical solutions of the embodiments of the disclosure, and does not constitute a limitation on the technical solutions of the embodiments of the disclosure. It is understandable by those ordinary skilled in the art that as system architectures evolve and new business scenarios emerge, the technical solutions of the embodiments of the disclosure are also applicable to similar technical problems.

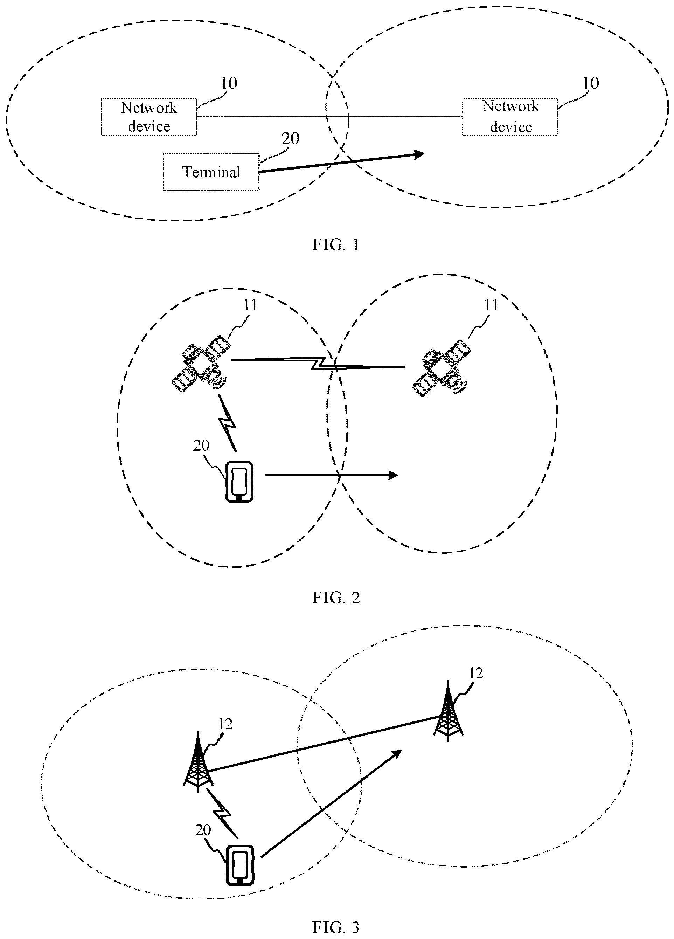

FIG. 1 illustrates a schematic diagram of a system architecture provided by an embodiment of the disclosure. The system architecture may include: a network device 10 and a terminal 20.

The network device 10 is a device for providing a wireless communication service for the terminal 20. A connection may be established between the network device 10 and the terminal 20 via a radio interface, so as to perform communication via this connection, including signaling and data interaction. There may be a plurality of network devices 10, and communication may also be performed between two adjacent network devices 10, such as wired communication and wireless communication. The terminal 20 may switch between different network devices 10, which means that the terminal 20 establishes connections with different network devices 10. For example, the network device may be various forms of macro base stations, micro base stations, relay stations, access points, etc. The terminal may be a user equipment (UE), an access terminal, a subscriber unit, a subscriber station, a mobile station, a mobile station, a remote station, a remote terminal, a mobile device, a wireless terminal, a user agent or a user apparatus. In an embodiment of the disclosure, the terminal 10 may also be a cellular phone, a cordless phone, a session initiation protocol (SIP) phone, a wireless local loop (WLL) station, a personal digital assistant (PDA), a handheld device having a wireless communication function, a computing device or other processing devices connected to a wireless modem, a vehicle-mounted device, a wearable device, a terminal in a 5th generation system (5GS) or a terminal in a future evolved public land mobile network (PLMN), etc., which is not limited in the embodiments of the disclosure.

In an example, as illustrated in FIG. 2, taking the NTN as an example, the network device 10 in the NTN may be a satellite 11. The satellite 11 is able to cover a certain ground area and provide wireless communication services for terminals 20 within the ground area, which may be referred to as a communication coverage of the satellite. In addition, the satellite 11 may orbit around the earth. It should be understood that there may be one or more network devices 10. That is, by deploying a plurality of satellites 11, communication coverage of different areas on the earth surface may be achieved. The terminal 20 in the NTN may be a terminal capable of communicating with the satellite 11, such as a satellite phone.

In another example, as illustrated in FIG. 3, taking a cellular communication network as an example, the network device 10 in the cellular communication network may be a base station 12. The base station 12 is a device deployed in an access network to provide the wireless communication function for the terminal 20. The base station 12 may include various forms of macro base stations, micro base stations, relay stations, access points, etc. In systems adopting different wireless access technologies, the device with network device functions may be referred to by different names. For example, in a 5G New Radio (NR) system, it is called the next generation Node B (gNodeB or gNB). As communication technology evolves, the name "base station" may change. For the convenience of description, in the embodiments of the disclosure, the above-mentioned apparatuses that provide the wireless communication function for the terminal 20 are collectively referred to as network devices.

In addition, the terminal 20 involved in the embodiments of the disclosure may include various handheld devices with wireless communication functions, vehicle-mounted devices, wearable devices, computing devices or other processing devices connected to the wireless modem, as well as various forms of UEs, mobile stations (MSs) and terminal devices. For the convenience of description, in the embodiments of the disclosure, the above-mentioned devices are collectively referred to as terminals.

In addition, in the embodiments of the disclosure, the terms "network" and "system" are often used interchangeably, which is understandable for those skilled in the art.

Firstly, the background technical knowledge involved in the disclosure will be introduced. The following related arts, as optional solutions, may be arbitrarily combined with the technical solutions of the embodiments of the disclosure, and all of them fall within the protection scope of the embodiments of the disclosure. The embodiments of the disclosure include at least part of the following contents.

NTN is an important technology introduced by 5G. The NTN generally provide communication services to users on the ground by means of satellite/drone communication.

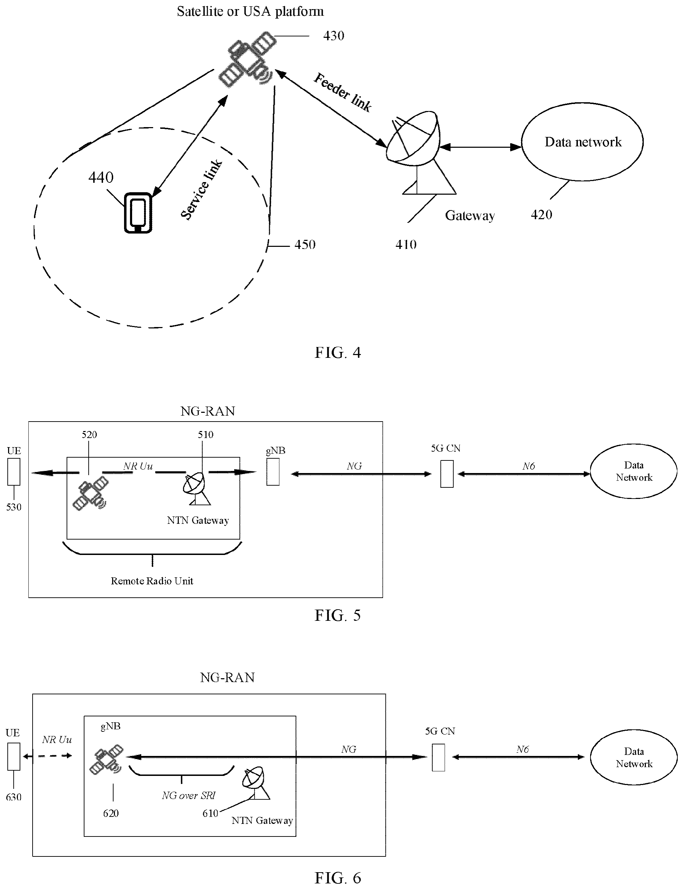

As illustrated in FIG. 4, in the NTN, a gateway 410 selects a gNB signal in a data network 420 and sends the gNB signal to a satellite 430, and a UE 440 exchanges information with the satellite 430 or an unmanned aerial system (UAS) platform. A coverage 450 refers to a communication coverage of the satellite 430, the gateway 410 exchanges information with the satellite 430 via a feeder link, and the terminal 440 exchanges information with the satellite 430 via a service link.

For the NTN, it may be divided into a transparent transmission mode or a regeneration mode depending on different ways the satellite processes signals. FIG. 5 illustrates the transparent transmission mode. After an NTN gateway 510 sends a gNB signal to a satellite 520, the satellite 520 converts the gNB signal to a satellite frequency band and sends the gNB signal to a terminal 530 via the satellite frequency band. In addition to frequency conversion and signal amplification, the satellite 520 does not demodulate the gNB signal, and its working process is similar to that of a repeater. FIG. 6 illustrates the regeneration mode. After an NTN gateway 610 sends a gNB signal to a satellite 620, the satellite 620 first demodulates and decodes the signal, then performs re-encoding and modulating (this process is called a regeneration process). The satellite 620 then sends a regenerated signal to a terminal 630 via a satellite frequency band.

A satellite altitude, an orbit and a satellite coverage of a typical NTN are shown in Table 1.

**Table 1: Satellite Altitude, Orbit and Typical Beam Footprint Size of NTN**

| Platforms | Altitude range | Orbit | Typical beam footprint size |
|---|---|---|---|
| Low-Earth Orbit (LEO) satellite | 300-1500 km | Circular around the earth | 100-1000 km |
| Medium-Earth Orbit (MEO) satellite | 7000-25000 km | | 100-1000 km |
| Geostationary Earth Orbit (GEO) satellite | 35786 km | Notional station keeping position fixed in terms of elevation/azimuth with respect to a given earth point | 200-3500 km |
| UAS platform (including HAPS) | 8-50 km (20 km for HAPS) | | 5-200 km |
| High Elliptical Orbit (HEO) satellite | 400-50000 km | Elliptical around the earth | 200-3500 km |

For IOT terminals, due to setting issues, some terminals cannot support simultaneous GNSS reception and LTE transmission/reception. However, a validity of GNSS position fix obtained by the terminal can only be maintained for a certain period of time. Beyond this period, the GNSS of the terminal becomes outdates, and the terminal needs to reacquire GNSS. Since the terminal cannot support simultaneous GNSS reception and LTE transmission/ reception, only one of them may be performed. After GNSS outdated, the terminals return to an idle state.

In order to prevent the terminal from returning to the idle state after GNSS outdated, the terminals reports a GNSS validity duration via a MAC CE. However, the specific configuration of MAC CE needs to be further discussed and researched.

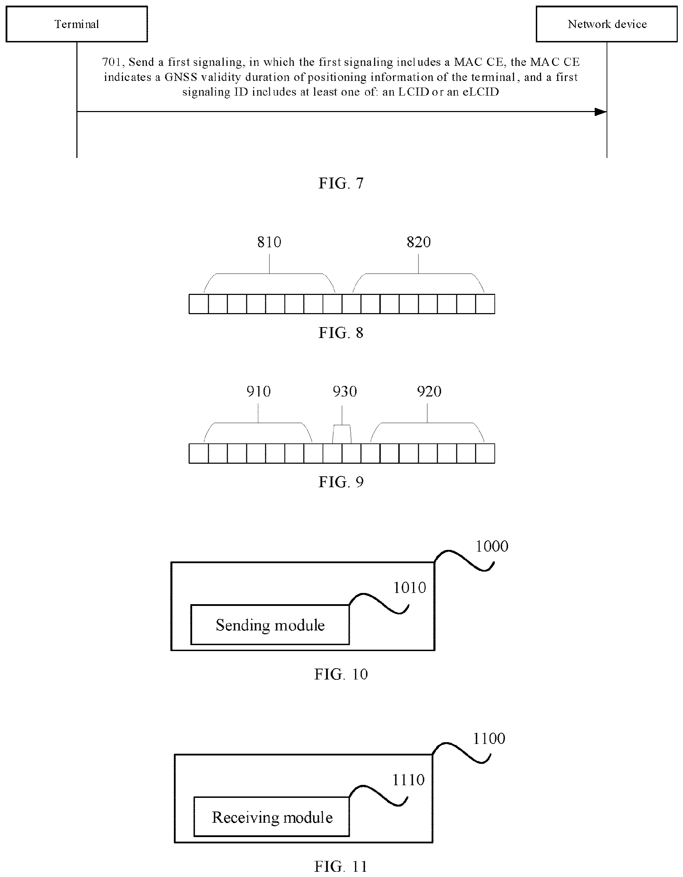

FIG. 7 is a flowchart of a wireless communication method provided by an embodiment of the disclosure. The method may be performed by any network architecture shown in FIGS. 1-3, and includes the following step 710.

At step 710, a terminal sends a first signaling to a network device, in which the first signaling includes a MAC CE, the MAC CE indicates a GNSS validity duration of positioning information of the terminal, and an identifier (ID) of the first signaling includes at least one of: an LCID or an eLCID.

Correspondingly, a network device may receive the first signaling sent by the terminal.

The positioning information of the terminal refers to GNSS position fix of the terminal. Since the validity of the positioning information of the terminal can only be maintained for a certain period of time, beyond which the positioning information of the terminal will time out (also referred to as GNSS outdated). The period of time during which the positioning information of the terminal remains valid is called a GNSS validity period (also known as the GNSS validity duration). Within the GNSS validity duration, the terminal may perform GNSS reception, and after GNSS outdated, the terminal returns to an idle state.

The terminal sends the first signaling to the network device. The first signaling includes the MAC CE (also referred to as a GNSS validity duration MAC CE) for indicating the GNSS validity duration of the positioning information of the terminal. In some possible embodiments of the disclosure, the GNSS validity duration of the positioning information of the terminal indicated in the first signaling may also be referred to as a GNSS validity duration.

The GNSS validity duration includes at least one of: a remaining GNSS validity duration, a total GNSS validity duration, and a GNSS expiration moment. A start moment of the remaining GNSS validity duration refers to a generation moment of the first signaling or a sending moment of the first signaling, and an end moment of the remaining GNSS validity duration refers to an expiration moment of the positioning information of the terminal. A start moment of the total GNSS validity duration refers to an acquisition moment of the positioning information of the terminal, and an end moment of the total GNSS validity duration refers to the expiration moment of the positioning information of the terminal. The GNSS expiration moment refers the expiration moment of the positioning information of the terminal.

In some embodiments, the GNSS validity duration MAC CE indicates the remaining GNSS validity duration of the positioning information of the terminal.

Exemplarily, the GNSS validity duration MAC CE indicates the end moment of the remaining GNSS validity duration, and the network device may determine the expiration moment of the positioning information of the terminal according to the end moment of the remaining GNSS validity duration.

For example, when the GNSS validity duration MAC CE indicates that the end moment of the remaining GNSS validity duration is t1, the network device determines that the expiration moment of the positioning information of the terminal is t1 according to the end moment t1 of the remaining GNSS validity duration.

Exemplarily, the GNSS validity duration MAC CE indicates the start moment of the remaining GNSS validity duration and a remaining GNSS validity period, and the network device may determine the expiration moment of the positioning information of the terminal according to the start moment of the remaining GNSS validity duration and the remaining GNSS validity period. The remaining GNSS validity period refers to a remaining validity period of the positioning information of the terminal.

For example, when the GNSS validity duration MAC CE indicates a start moment t2 of the remaining GNSS validity duration and a remaining GNSS validity period T1, the network device may determine that the expiration moment of the positioning information of the terminal is t2+T1 according to the start moment t2 of the remaining GNSS validity duration and the remaining GNSS validity period T1.

In some embodiments, the GNSS validity duration MAC CE may indicate the start moment of the remaining GNSS validity duration, the remaining GNSS validity period and the end moment of the remaining GNSS validity duration, which is not limited in the disclosure.

In some embodiments, the GNSS validity duration MAC CE indicates the total GNSS validity duration of the positioning information of the terminal.

Exemplarily, the GNSS validity duration MAC CE indicates the end moment of the total GNSS validity duration, and the network device determines the expiration moment of the positioning information of the terminal according to the end moment of the total GNSS validity duration.

For example, when the GNSS validity duration MAC CE indicates that the end moment of the total GNSS validity duration is t3, the network device determines that the expiration moment of the positioning information of the terminal is t3 according to the end moment t3 of the total GNSS validity duration.

Exemplarily, the GNSS validity duration MAC CE indicates the start moment of the total GNSS validity duration and a total GNSS validity period, and the network device may determine the expiration moment of the positioning information of the terminal according to the start moment of the total GNSS validity duration and the total GNSS validity period. The total GNSS validity period refers to a total validity period of the positioning information of the terminal.

For example, if the GNSS validity duration MAC CE indicates a start moment t4 of the total GNSS validity duration and a total GNSS validity period T2, the network device may determine that the expiration moment of the positioning information of the terminal is t4+T2 according to the start moment T4 of the total GNSS validity duration and the total GNSS validity period T2.

In some embodiments, the GNSS validity duration MAC CE may indicate the start moment of the total GNSS validity duration, the total GNSS validity period and the end moment of the total GNSS validity duration, which is not limited in the disclosure.

In some embodiments, the GNSS validity duration MAC CE indicates the expiration moment of the positioning information of the terminal.

For example, the GNSS validity duration MAC CE indicates that the expiration moment of the positioning information of the terminal is t5.

The ID of the first signaling may be configured by a network or may be predefined, which is not limited by the disclosure.

In some embodiments, the ID of the first signaling is the LCID, and is one LCID selected from an LCID reserved pool including at least one LCID.

In some embodiments, the ID of the first signaling is configured by the network, the network device selects one LCID from the LCID reserved pool as the ID of the first signaling. Exemplarily, the network device randomly selects one LCID from the LCID reserved pool as the ID of the first signaling. For example, the LCID reserved pool includes LCIDs {01011, 01110}, the network device randomly selects one LCID from the LCID reserved pool as the ID of the first signaling and configures it to the terminal. For example, the network device randomly selects the LCID 01110 as the ID of the first signaling, and sends first configuration information to the terminal. The first configuration information includes the ID of the first signaling, i.e., the LCID 01110.

In some embodiments, the ID of the first signaling is predefined. Exemplarily, the predefined ID of the first signaling is one LCID randomly selected from the LCID reserved pool. For example, the LCID reserved pool includes LCIDs {01011, 01110}, the predefined ID of the first signaling is one LCID randomly selected from the LCID reserved pool. For example, the LCID 01011 may be randomly selected and predefined as the ID of the first signaling.

In some embodiments, the ID of the first signaling is the eLCID, and is one eLCID selected from an eLCID reserved pool including at least one eLCID.

In some embodiments, the ID of the first signaling is configured by the network. The network device selects one eLCID from the eLCID reserved pool as the ID of the first signaling. Exemplarily, the network device randomly selects one eLCID from the eLCID reserved pool as the ID of the first signaling. For example, the eLCID reserved pool includes eLCIDs {000111, 11111}, the network device randomly selects one eLCID from the eLCID reserved pool as the ID of the first signaling and configures it to the terminal. For example, the network device randomly selects the eLCID 111111 as the ID of the first signaling, and sends second configuration information to the terminal. The second configuration information includes the ID of the first signaling, i.e., the eLCID 111111.

In some embodiments, the ID of the first signaling is predefined. Exemplarily, the predefined ID of the first signaling is one eLCID randomly selected from the eLCID reserved pool. For example, the eLCID reserved pool includes eLCIDs {000111, 111111}, the predefined ID of the first signaling is one eLCID randomly selected from the eLCID reserved pool. For example, the eLCID 000111 may be randomly selected and predefined as the ID of the first signaling.

The above LCID reserved pool and the eLCID reserved pool may be predefined or configured by the network, which is not limited by the disclosure. Generally, the LCID reserved pool and the eLCID reserved pool are predefined. Both the eLCID and the LCID are used for distinguishing logic channel data, MAC control messages, and padding, with the only difference being in the number of bits. Therefore, both the eLCID and the LCID are applicable to the technical solutions provided by the embodiments of the disclosure.

In the technical solutions provided by the embodiments of the disclosure, by taking the LCID or the eLCID as the ID of the first signaling, the GNSS validity duration of the positioning information of the terminal is indicated to the network device via the first signaling, which enables the network device to obtain the GNSS validity duration of the positioning information of the terminal, so as to prevent a link failure between the network device and the terminal caused by outdating of the positioning information of the terminal, thereby ensuring a stability of links between the network device and the terminal and further ensuring a stability of information transmission.

In some embodiments, the GNSS validity duration MAC CE is a MAC CE carrying the GNSS validity duration. The embodiments of the disclosure provided the following introduction on how the GNSS validity duration MAC CE carries the GNSS validity duration.

One MAC PDU includes at least one of the following: a MAC CE, a MAC header, a MAC service data unit (SDU), or a padding. One MAC header includes one or more MAC sub headers. Each sub header corresponds to one MAC PDU, one MAC CE, or one padding.

In some embodiments, the first signaling includes a sub header, which carries the ID of the first signaling.

In some embodiments, the first signaling includes a sub PDU, which carries the GNSS validity duration.

In some embodiments, a size of the sub PDU is one byte (8 bits). The GNSS validity duration is represented by at least 4 bits. When there are remaining bits in the sub PDU, the remaining bits are called reserved bits. When the GNSS validity duration occupies 8 bits/one byte, there is no remaining bit in the sub PDU.

For example, when the GNSS validity duration is represented by 4 bits, the remaining 4 bits in the sub PDU are reserved bits. For example, when the GNSS validity duration is represented by 5 bits, the remaining 3 bits in the sub PDU are reserved bits. For example, when the GNSS validity duration is represented by 8 bits, there is no reserved bit in the sub PDU.

In some embodiments, the size of the sub PDU is two bytes (16 bits). The GNSS validity duration is represented by at least 8 bits. When there are remaining bits in the sub PDU, the remaining bits are called reserved bits.

For example, when the GNSS validity duration is represented by 8 bits, the remaining 8 bits in the sub PDU are called reserved bits. For example, when the GNSS validity duration is represented by 10 bits, the remaining 6 bits in the sub PDU are called reserved bits. For example, when the GNSS validity duration is represented by 16 bits, there is no reserved bit in the sub PDU.

In some embodiments, the reserved bits precede the bits used to represent the GNSS validity duration. Exemplarily, as illustrated in FIG. 8, the size of the sub PDU is two bytes, and the GNSS validity duration is represented by 8 bits, so the reserved bits 810 are the first 8 bits, and the bits 820 used for representing the GNSS validity duration are the last 8 bits.

A length of bytes used to represent the sub PDU is not limited in the disclosure. Exemplarily, the length of bytes used to represent the sub PDU may be adjusted according to a number of bits used to represent the GNSS validity duration. Exemplarily, the number of bits used to represent the GNSS validity duration is 8n+b, then n+1 bytes are used to represent the sub PDU, where n is an integer greater than or equal to 0 and b is a positive integer less than 8. For example, when the number of bits used to represent the GNSS validity duration is 8*2+4=20, then 2+1=3 bytes are used to represent the sub PDU.

According to the above method, the length of bytes used to represent the sub PDU is adjusted according to the number of bits used to represent the GNSS validity duration, so that the number of bytes of the sub PDU may be reduced while ensuring that the GNSS validity duration may be fully represented, thereby reducing the size of the first signaling and reducing transmission resources required for sending the first signaling.

An actual GNSS validity duration refers to an actual validity duration of the positioning information of the terminal, and the GNSS validity duration refers to the GNSS validity duration indicated by the first signaling. The GNSS validity duration and the actual GNSS validity duration may be the same or different, which is not limited by the disclosure.

In practical applications, there may be cases where representing the actual GNSS validity duration in the first signaling may occupy more bits, resulting in a waste of transmission resources. Therefore, the actual GNSS validity duration may be processed to obtain an easily representable GNSS validity duration. The terminal sends the easily representable GNSS validity duration to the network device via the first signaling, to achieve the purpose of saving transmission resources.

Exemplarily, a mapping relationship may be established between the actual GNSS validity duration and a series of elements. The first signaling only needs to indicate any one element within the above series of elements, and the network device may determine the actual GNSS validity duration according to this element.

In some embodiments, there is a mapping relationship between the GNSS validity duration indicated by the first signaling and the actual GNSS validity duration, and the actual GNSS validity duration is an actual validity duration of the positioning information.

The GNSS validity duration indicated by the first signaling refers to the GNSS validity duration indicated in the sub PDU, which has a mapping relationship with the actual GNSS validity duration. The actual GNSS validity duration refers to an actual remaining GNSS validity duration, which means an actual remaining validity period of the positioning information of the terminal. The mapping relationship refers to a connection between the GNSS validity duration indicated by the first signaling and the actual GNSS validity duration.

In some embodiments, the mapping relationship between the GNSS validity duration indicated by the first signaling and the actual GNSS validity duration is indicated in the form of a mapping table. The mapping table is used to store the GNSS validity duration indicated by the first signaling and the actual GNSS validity duration according to a key-value relationship. The GNSS validity duration indicated by the first signaling may be a key or a value, which is not limited in the disclosure.

Exemplarily, the GNSS validity duration indicated by the first signaling is the key, and the form of the mapping table may be as shown in Table 2.

**Table 2: Mapping table of GNSS validity duration indicated by first signaling and actual GNSS validity duration**

| GNSS validity duration indicated by first signaling | Actual GNSS validity duration |
|---|---|
| 0 | Remaining GNSS validity duration reaching a threshold |
| 1 | Remaining GNSS validity duration being greater than the threshold |

Exemplarily, the GNSS validity duration indicated by the first signaling is the value, and the form of the mapping table is as shown in Table 3.

**Table 3: Mapping table of GNSS validity duration indicated by first signaling and actual GNSS validity duration**

| Actual GNSS validity duration | GNSS validity duration indicated by first signaling |
|---|---|
| Remaining GNSS validity duration reaching a threshold | 0 |
| Remaining GNSS validity duration being greater than the threshold | 1 |

The above threshold may be configured by a network or may be predefined, which is not limited by the disclosure. Exemplarily, the above threshold may be configured by the network device according to a transmission latency between the network device and the terminal. Exemplarily, the above threshold may be predefined based on experience.

It should be noted that the above mapping table is only illustrated as an example, and the mapping relationship between the GNSS validity duration indicated by the first signaling and the actual GNSS validity duration is not limited by the disclosure.

According to the above method, the relationship between the GNSS validity duration indicated by the first signaling and the actual GNSS validity duration is represented in the form of the mapping table, and the actual GNSS validity duration is converted into an easily understandable symbol, so that the network device may better determine the validity duration of the positioning information of the terminal.

In addition, a mapping relationship between the actual GNSS validity duration and a simple element may be established, and the GNSS validity duration represented by the simple element is transmitted in the first signaling, which reduces the size of the first signaling, thereby saving transmission resources.

Exemplarily, a mathematical operation is performed on the actual GNSS validity duration to convert the actual GNSS validity duration into an easily representable GNSS validity duration. The first signaling indicates the easily representable GNSS validity duration, and the network device may determine the actual GNSS validity duration according to the GNSS validity duration indicated by the first signaling and the corresponding mathematical operation.

In some embodiments, the actual GNSS validity duration is a product of the GNSS validity duration indicated by the first signaling and a first value, and the actual GNSS validity duration is an actual validity duration of the positioning information.

Exemplarily, if the first value is X, the relationship between the actual GNSS validity duration and the GNSS validity duration indicated by the first signaling may be represented as: the GNSS validity duration indicated by the first signaling*X= the actual GNSS validity duration.

The first value may be configured by a network or may be predefined, which is not limited in the disclosure. Exemplarily, the first value is configured by the network device according to a validity period of the positioning information of the terminal. Exemplarily, the first value is predefined.

In some embodiments, the first value is a positive integer greater than or equal to 1 and less than or equal to 100. For example, when X is2, the actual GNSS validity duration is the product of the GNSS validity duration indicated by the first signaling and 2. For another example, when X is 10, the actual GNSS validity duration is the product of the GNSS validity duration indicated by the first signaling and 10.

According to the above method, the actual GNSS validity duration is converted into a smaller value via the first value, and the terminal indicates the smaller value to the network device via the first signaling, which reduce a number of bits required for representing the GNSS validity duration, and further reduces a number of bytes of the sub PDU, thereby reducing a size of the first signaling and reducing transmission resources required for transmitting the first signaling.

Exemplarily, by adjusting a unit and a step size used for representing the GNSS validity duration, the represented GNSS validity duration may be made as simple as possible. The network device may determine the actual GNSS validity duration according to the GNSS validity duration indicated by the first signaling and the step size of the GNSS validity duration. The step size refers to a stepping length, and the GNSS validity duration indicated by the first signaling is quantized by the step size. Exemplarily, every time the GNSS validity duration indicated by the first signaling increases by 1, the actual GNSS validity duration indicated increases by N, where N is called the step size.

In some embodiments, the first signaling indicates the GNSS validity duration in one of the following ways: indicating the GNSS validity duration in minutes; indicating the GNSS validity duration in seconds; and indicating the GNSS validity duration in milliseconds.

Exemplarily, the first signaling indicates the GNSS validity duration in minutes. For example, the GNSS validity duration indicated by the first signaling is 1 min.

Exemplarily, the first signaling indicates the GNSS validity duration in seconds. For example, the GNSS validity duration indicated by the first signaling is 60 s.

Exemplarily, the first signaling indicates the GNSS validity duration in milliseconds. For example, the GNSS validity duration indicated by the first signaling is 6*10⁴ ms.

The above "min" is short for minutes, "s" is short for seconds, and "ms" is short for milliseconds.

In some embodiments, the unit adopted by the first signaling to indicate the GNSS validity duration may be configured by a network or may be predefined.

In some embodiments, the unit adopted by the first signaling to indicate the GNSS validity duration may be set by the terminal according to the actual GNSS validity duration, and the first signaling carries first indication information. The first indication information indicates the unit adopted by the first signaling to indicate the GNSS validity duration.

There is a mapping relationship between a content indicated by the first indication information and the unit adopted by the first signaling to indicate the GNSS validity duration, which may be configured by a network or may be predefined, which is not limited by the disclosure.

For example, when the content indicated by the first indication information is 01, it indicates that the unit adopted by the first signaling to indicate the GNSS validity duration is minute. When the content indicated by the first indication information is 10, it indicates that the unit adopted by the first signaling to indicate the GNSS validity duration is second. When the content indicated by the first indication information is 11, it indicates that the unit adopted by the first signaling to indicate the GNSS validity duration is millisecond.

In some embodiments, the first signaling indicates the GNSS validity duration in steps of integer seconds, or the first signaling indicates the GNSS validity duration in steps of fractional seconds.

Exemplarily, the first signaling indicates the GNSS validity duration in steps of integer seconds. For example, the first signaling indicates the GNSS validity duration in steps of 1 second. When the GNSS validity duration indicated by the first signaling is 001, the actual GNSS validity duration is 1 second. When the GNSS validity duration indicated by the first signaling is 010, the actual GNSS validity duration is 2s. For another example, the first signaling indicates the GNSS validity duration in steps of 10s. When the GNSS validity duration indicated by the first signaling is 001, the actual GNSS validity duration is 10s. When the GNSS validity duration indicated by the first signaling is 010, the actual GNSS validity duration is 20s.

Exemplarily, the first signaling indicates the GNSS validity duration in steps of fractional seconds. For example, the first signaling indicates the GNSS validity duration in steps of 0.1s. When the GNSS validity duration indicated by the first signaling is 001, the actual GNSS validity duration is 0.1s. When the GNSS validity duration indicated by the first signaling is 010, the actual GNSS validity duration is 0.2s. For another example, the first signaling indicates the GNSS validity duration in steps of 0.2s. When the GNSS validity duration indicated by the first signaling is 001, the actual GNSS validity duration is 0.2s. When the GNSS validity duration indicated by the first signaling is 010, the actual GNSS validity duration is 0.4s.

In some embodiments, the step size adopted by the first signaling to indicate the GNSS validity duration may be configured by a network or may be predefined.

In some embodiments, the step size adopted by the first signaling to indicate the GNSS validity duration may be set by the terminal according to the actual GNSS validity duration, and the first signaling carries second indication information. The second indication information indicates the step size adopted by the first signaling to indicate the GNSS validity duration.

There is a mapping relationship between a content indicated by the second indication information and the step size adopted by the first signaling to indicate the GNSS validity duration. The mapping relationship may be configured by a network or may be predefined, which is not limited by the disclosure.

For example, when the content indicated by the second indication information is 1, it indicates that the step size adopted by the first signaling to indicate the GNSS validity duration is integer seconds. When the content indicated by the second indication information is 0, it indicates that the step size adopted by the first signaling to indicate the GNSS validity duration is fractional seconds.

According to the above method, the GNSS validity duration that is inconvenient to represent is converted into a value that is more convenient to represent. For example, fractional seconds may be converted into integers for representation, which is more convenient for the network device to decode and receive.

In some embodiments, the GNSS validity duration is represented in a form of n (min) m (s). When the GNSS validity duration is converted into a form of xx (min) or xxx (s) for representation, more bits may be required. Therefore, the first signaling may indicated the GNSS validity duration to the network device in the form of n (min) m (s).

In some embodiments, a second part of the GNSS validity duration is indicated by M bits in the first signaling, and a minute part of the GNSS validity duration is indicated by N bits, where M and N are positive integers.

Exemplarily, the GNSS validity duration includes the minute part and the second part, and the first signaling indicates it in the form of n (min) m (s). For example, the GNSS validity duration is 3 min 20 s.

In some embodiments, a sum of M and N may be determined according to the number of bytes of the sub PDU.

Exemplarily, the sub PDU is represented by 1 byte, so the sum of M and N does not exceed 8. Exemplarily, the sub PDU is represented by 2 bytes, so the sum of M and N does not exceed 16.

The values of M and N may be configured by a network or may be predefined, which is not limited by the disclosure. Exemplarily, the values of M and N configured by the network are the same. Exemplarily, a difference between M and N is predefined as a second value. For example, M-N=1.

In some embodiments, the values of M and N may be set by the terminal according to the GNSS validity duration, and the first signaling carries third indication information. The third indication information is used to indicate the values of M and N.

In some embodiments, there are idle bits between the bits used for representing the minute part and the bits used for representing the second part. Exemplarily, as illustrated in FIG. 9, M bits 910 are used for representing the second part of the GNSS validity duration, N bits 920 are used for representing the minute part of the GNSS validity duration, and there are idle bits 930 between the M bits 910 and the N bits 920.

In some embodiments, the N bits used for representing the minute part are located after the M bits used for representing the second part.

In some embodiments, the N bits used for representing the minute part are located before the M bits used for representing the second part.

The order between the N bits used for representing the minute part and the M bits used for representing the second part is not limited by the disclosure.

In some embodiments, M bits indicate the second part of the GNSS validity duration in steps of integer seconds, or M bits indicate the second part of the GNSS validity duration in steps of fractional seconds.

Exemplarily, M bits indicate the second part of the GNSS validity duration in steps of integer seconds. Exemplarily, M bits indicate the second part of the GNSS validity duration in steps of 1 s. When the second part of the GNSS validity duration indicated by the M bits is 001, the second part of the actual GNSS validity duration is 1 s. When the second part of the GNSS validity duration indicated by the M bits is 010, the second part of the actual GNSS validity duration is 2 s. For another example, the M bits indicate the second part of the GNSS validity duration in steps of 10 s. When the second part of the GNSS validity duration indicated by the M bits is 001, the second part of the actual GNSS validity duration is 10 s. When the second part of the GNSS validity duration indicated by the M bits is 010, the second part of the actual GNSS validity duration is 20 s.

Exemplarily, M bits indicate the second part of the GNSS validity duration in steps of fractional seconds. For example, the M bits indicate the second part of the GNSS validity duration in steps of 0.1 s. When the second part of the GNSS validity duration indicated by the M bits is 001, the second part of the actual GNSS validity duration is 0.1 s. When the second part of the GNSS validity duration indicated by the M bits is 010, the second part of the actual GNSS validity duration is 0.2 s. For another example, the M bits indicate the second part of the GNSS validity duration in steps of 0.2 s. When the second part of the GNSS validity duration indicated by the M bits is 001, the second part of the actual GNSS validity duration is 0.2 s. When the second part of the GNSS validity duration indicated by the M bits is 010, the second part of the actual GNSS validity duration is 0.4 s.

In some embodiments, the N bits indicate the minute part of the GNSS validity duration in steps of integer minutes, or the N bits indicate the minute part of the GNSS validity duration in steps of fractional minutes.

Exemplarily, the N bits indicate the minute part of the GNSS validity duration in steps of integer minutes. Exemplarily, the N bits indicate the minute part of the GNSS validity duration in steps of 1 min. When the minute part of the GNSS validity duration indicated by the N bits is 001, the minute part of the actual GNSS validity duration is 1 min. When the minute part of the GNSS validity duration indicated by the N bits is 010, the minute part of the actual GNSS validity duration is 2 mins. For another example, the N bits indicate the minute part of the GNSS validity duration in steps of 10 mins. When the minute part of the GNSS validity duration indicated by the N bits is 001, the minute part of the actual GNSS validity duration is 10 mins. When the minute part of the GNSS validity duration indicated by the N bits is 010, the minute part of the actual GNSS validity duration is 20 mins.

Exemplarily, the N bits indicate the minute part of the GNSS validity duration in steps of fractional minutes. For example, the N bits indicate the minute part of the GNSS validity duration in steps of 0.1mins. When the minute part of the GNSS validity duration indicated by the N bits is 001, the minute part of the actual GNSS validity duration is 0.1 mins. When the minute part of the GNSS validity duration indicated by the N bits is 010, the minute part of the actual GNSS validity duration is 0.2 mins. For another example, the N bits indicate the minute part of the GNSS validity duration in steps of 0.2mins. When the minute part of the GNSS validity duration indicated by the N bits is 001, the minute part of the actual GNSS validity duration is 0.2 mins. When the minute part of the GNSS validity duration indicated by the N bits is 010, the minute part of the actual GNSS validity duration is 0.4 mins.

The value of the step size adopted by the M bits to represent the second part of the GNSS validity duration may be the same as or different from the value of the step size adopted by the N bits to represent the minute part of the GNSS validity duration, which is not limited by the disclosure.

Exemplarily, the value of the step size adopted by the M bits to represent the second part of the GNSS validity duration is the same as the value of the step size adopted by the N bits to represent the minute part of the GNSS validity duration. For example, the M bits represents the second part of the GNSS validity duration in steps of 1 s, and the N bits represents the minute part of the GNSS validity duration in steps of 1 min. For another example, the M bits represents the second part of the GNSS validity duration in steps of 0.1 s, and the N bits represents the minute part of the GNSS validity duration in steps of 0.1 min.

Exemplarily, the value of the step size adopted by the M bits to represent the second part of the GNSS validity duration is different from the value of the step size adopted by the N bits to represent the minute part of the GNSS validity duration. For example, the M bits represents the second part of the GNSS validity duration in steps of 1 s, and the N bits represents the minute part of the GNSS validity duration in steps of 10 mins. For another example, the M bits represents the second part of the GNSS validity duration in steps of 0.1 s, and the N bits represents the minute part of the GNSS validity duration in steps of 0.5 mins. In another example, the M bits represents the second part of the GNSS validity duration in steps of 1 s, and the N bits represents the minute part of the GNSS validity duration in steps of 0.1 mins. In further another example, the M bits represents the second part of the GNSS validity duration in steps of 0.1 s, and the N bits represents the minute part of the GNSS validity duration in steps of 5 mins.

According to the above method, the first signaling indicates the GNSS validity duration in the form of n (min) m (s) to the network device, eliminating the need to convert the GNSS validity duration into a GNSS validity duration represented by a signal unit, such as xx (min) or xxx (s), which reduces the processing steps for the terminal to process the GNSS validity duration, and saves the power of the terminal.

The apparatus embodiments of the disclosure are described below, which may be configured to execute the method embodiments of the disclosure. Details not disclosed in the apparatus embodiments of the disclosure may refer to the method embodiments of the disclosure.

FIG. 10 is a block diagram of a wireless communication apparatus 1000 provided by an embodiment of the disclosure. The apparatus has the function of implementing the above example of the wireless communication method on the terminal side. The function may be implemented by hardware or by hardware executing corresponding software. The apparatus may be the terminal described above, or may be arranged in the terminal. As illustrated in FIG. 10, an apparatus 1000 may include a sending module 1010.

The sending module 1010 is configured to send a first signaling to a network device, in which the first signaling includes a MAC CE, the MAC CE indicates a GNSS validity duration of positioning information of the terminal, and an ID of the first signaling includes at least one of:
a LCID; or
an eLCID.

In some embodiments, the ID of the first signaling is the LCID, and is one LCID selected from an LCID reserved pool including at least one LCID.

In some embodiments, the ID of the first signaling is the eLCID, and is one eLCID selected from an eLCID reserved pool including at least one eLCID.

In some embodiments, the first signaling includes a sub header carrying the ID of the first signaling.

In some embodiments, the first signaling includes a sub PDU carrying the GNSS validity duration.

In some embodiments, a size of the sub PDU is one byte.

In some embodiments, the GNSS validity duration is represented by at least 4 bits.

In some embodiments, a size of the sub PDU is two bytes.

In some embodiments, the GNSS validity duration is represented by at least 8 bits.

In some embodiments, there is a mapping relationship between the GNSS validity duration indicated by the first signaling and an actual GNSS validity duration, and the actual GNSS validity duration is an actual validity duration of the positioning information.

In some embodiments, an actual GNSS validity duration is a product of the GNSS validity duration indicated by the first signaling and a first value, and the actual GNSS validity duration is an actual validity duration of the positioning information.

In some embodiments, the first signaling indicates the GNSS validity duration in one of the following ways: indicating the GNSS validity duration in minutes; indicating the GNSS validity duration in seconds; and indicating the GNSS validity duration in milliseconds.

In some embodiments, a second part of the GNSS validity duration is indicated by M bits in the first signaling, and a minute part of the GNSS validity duration is indicated by N bits, where M and N are positive integers..

In some embodiments, the M bits indicate the second part of the GNSS validity duration in steps of integer seconds; or, the M bits indicate the second part of the GNSS validity duration in steps of fractional seconds.

In some embodiments, the N bits indicate the minute part of the GNSS validity duration in steps of integer minutes; or, the N bits indicate the minute part of the GNSS validity duration in steps of fractional minutes.

In the technical solution provided by the embodiment of the disclosure, by taking the LCID or the eLCID as the ID of the first signaling, the GNSS validity duration of the positioning information of the terminal is indicated to the network device via the first signaling, which enables the network device to obtain the GNSS validity duration of the positioning information of the terminal, so as to prevent a link failure between the network device and the terminal caused by outdating of the positioning information of the terminal, thereby ensuring a stability of links between the network device and the terminal and further ensuring a stability of information transmission.

FIG. 11 is a block diagram of a wireless communication apparatus provided by another embodiment of the disclosure. The apparatus has the function of implementing the above example of the wireless communication method on the network device side. The function may be implemented by hardware or by hardware executing corresponding software. The apparatus may be the network device described above, or may be arranged in the network device. As illustrated in FIG. 11, an apparatus 1100 may include a receiving module 1110.

The receiving module 1110 is configured to receive a first signaling from a terminal, in which the first signaling includes a MAC CE, the MAC CE indicates a GNSS validity duration of positioning information of the terminal, and an ID of the first signaling includes at least one of:
an LCID; or
an eLCID.

In some embodiments, the ID of the first signaling is the LCID, and is one LCID selected from an LCID reserved pool including at least one LCID.

In some embodiments, the ID of the first signaling is the eLCID, and is one eLCID selected from an eLCID reserved pool including at least one eLCID.

In some embodiments, the first signaling includes a sub header, and the sub header carries the ID of the first signaling.

In some embodiments, the first signaling includes a sub PDU, and the sub PDU carries the GNSS validity duration.

In some embodiments, a size of the sub PDU is one byte.

In some embodiments, the GNSS validity duration is represented by at least 4 bits.

In some embodiments, a size of the sub PDU is two bytes.

In some embodiments, the GNSS validity duration is represented by at least 8 bits.

In some embodiments, there is a mapping relationship between the GNSS validity duration indicated by the first signaling and an actual GNSS validity duration, and the actual GNSS validity duration is an actual validity duration of the positioning information.

In some embodiments, an actual GNSS validity duration is a product of the GNSS validity duration indicated by the first signaling and a first value, and the actual GNSS validity duration is an actual validity duration of the positioning information.

In some embodiments, the first signaling indicates the GNSS validity duration in one of the following ways: indicating the GNSS validity duration in minutes; indicating the GNSS validity duration in seconds; and indicating the GNSS validity duration in milliseconds.

In some embodiments, a second part of the GNSS validity duration is indicated by M bits in the first signaling, and a minute part of the GNSS validity duration is indicated by N bits, where M and N are positive integers..

In some embodiments, the M bits indicate the second part of the GNSS validity duration in steps of integer seconds; or, the M bits indicate the second part of the GNSS validity duration in steps of fractional seconds.

In some embodiments, the N bits indicate the minute part of the GNSS validity duration in steps of integer minutes; or, the N bits indicate the minute part of the GNSS validity duration in steps of fractional minutes.

In the technical solution provided by the embodiment of the disclosure, by taking the LCID or the eLCID as the ID of the first signaling, the GNSS validity duration of the positioning information of the terminal is indicated to the network device via the first signaling, which enables the network device to obtain the GNSS validity duration of the positioning information of the terminal, so as to prevent a link failure between the network device and the terminal caused by outdating of the positioning information of the terminal, thereby ensuring a stability of links between the network device and the terminal and further ensuring a stability of information transmission.

It should be noted that the apparatus provided in the above embodiments, when implementing its functions, only uses the classification of the above-mentioned functional modules as an example. In actual applications, the above-mentioned functions may be allocated to different functional modules as needed. That is, an internal structure of the device may be divided into different functional modules to complete all or part of the functions described above.

With regard to the apparatus in the above embodiments, the specific way in which each module performs operations has been described in detail in the method embodiments, and will not be described in detail here.

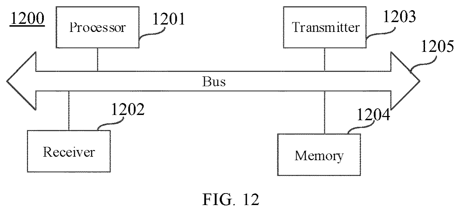

FIG. 12 is a block diagram of a communication device 200 provided by an embodiment of the disclosure. The communication device 1200 may be the aforementioned terminal or network device. The communication device 1200 may include: a processor 1201, a receiver 1202, a transmitter 1203, a memory 1204 and a bus 1205. The processor 1201 is configured to realize the functions of the processing model in the above-mentioned apparatus embodiments, the receiver 1202 is configured to realize the functions of the receiving module in the above-mentioned apparatus embodiments, and the transmitter 1203 is configured to realize the functions of the sending module in the above-mentioned apparatus embodiments.

The processor 1201 includes one or more processing cores, and the processor 1201 executes various functional applications and information processing by running software programs and modules.

The receiver 1202 and the transmitter 1203 may be realized as a communication component, such as a communication chip.

The memory 1204 is connected to the processor 1201 via the bus 1205.

The memory 1204 may be configured to store a computer program, and the processor 1201 is configured to execute the computer program to implement the wireless communication method on the terminal side or the wireless communication method on the network device side.

In addition, the memory 1204 may be realized by any type of volatile or nonvolatile memory devices or their combinations, including but not limited to: a magnetic disk or an optical disk, an electrically erasable programmable read only memory (EEPROM), an erasable programmable read only memory (EPROM), a static random-access memory (SRAM), a read only memory (ROM), a magnetic memory, a flash memory and a programmable ROM (PROM).

The embodiments of the disclosure also provides a computer readable storage medium. The storage medium stores a computer program, and the computer program is configured to be executed by a processor, to implement the wireless communication method on the terminal side or the wireless communication method on the network device side. In some embodiments, the computer readable storage medium may include: a ROM, a random-access memory (RAM), a solid state drive (SSD) or an optical disk. The RAM may include a resistance RAM (RERAM) and a dynamic RAM (DRAM).

The embodiments of the disclosure also provides a chip. The chip includes: a programmable logic circuit and/or a program instruction. When the chip is running, the wireless communication method on the terminal side or the wireless communication method on the network device side is implemented.

The embodiments of the disclosure also provides a computer program product. The computer program product includes a computer program, the computer program is stored in a computer readable storage medium, and a processor reads the computer program from the computer readable storage medium and executes the computer program to realize the wireless communication method on the terminal side or the wireless communication method on the network device side.

The embodiment of the disclosure also provides a communication system. The communication system includes: a terminal and a network device. The terminal is configured to implement the wireless communication method on the terminal side, and the network device is configured to implement the wireless communication method on the network device side.

It should be understood that "indicating" mentioned in the embodiments of the disclosure may be direct indicating, indirect indicating, or indicating an association relationship. For example, if A indicates B, it may mean that A directly indicates B, e.g., B may be obtained through A; it may also mean that A indirectly indicates B, e.g., A indicates C, and B may be obtained through C; or it may mean that there is an association relationship between A and B.

In the description of the embodiments of the disclosure, the term "corresponding" may indicate that there is a direct or indirect correspondence between the two, or that there is an association relationship between the two, or that there is a relationship of indication and being indicated, configuration and being configured, etc., between the two.

As used herein, "a plurality of" means two or more, and "and/or" describes an association relationship of associated objects, which indicates three kinds of relationships. For example, "A and/or B" indicates that A exists alone, A and B both exist, and B exists alone. The character "/" generally indicates that the associated objects before and after the character "/" are in an "or" relationship.

In the disclosure, "predefined" may be realized by pre-storing corresponding codes, tables or other means for indicating relevant information in devices (for example, terminals and network devices), and its specific implementation is not limited in the disclosure. For example, "predefined" may refer to "defined in a protocol".

In the disclosure, the "protocol" may refer to a standard protocol in a communication field, including, for example, a LTE protocol, a NR protocol and related protocols applied in future communication systems, which is not limited in the disclosure.

The term "greater than or equal to" mentioned herein means "greater than or equal to" or "greater than", and the term "less than or equal to" means "less than or equal to" or "less than".

In addition, the serial numbers of steps described in the disclosure only illustrate a possible execution order of steps. In some other embodiments, the above steps may not be executed in the sequence indicated by the serial numbers. For example, two steps with different serial numbers may be executed at the same time, or two steps with different serial numbers are executed in the opposite order to that shown in the figure, which is not limited in the embodiments of the disclosure.

Those skilled in the art understand that in one or more of the above examples, the functions described in the embodiments of the disclosure may be implemented by hardware, software, firmware or any combination thereof. When implemented using software, the functions may be stored in a computer-readable medium or transmitted as one or more instructions or codes on the computer-readable medium. The computer-readable medium includes both a computer storage medium and a communication medium. The communication medium may include any medium that facilitates transfer of computer programs from one place to another, and the storage medium may be any available medium that may be accessed by a general purpose computer or a dedicated computer.

The above description is only example embodiments of the disclosure and is not intended to limit the disclosure. Any modification, equivalent substitution, improvement, etc. made within the spirit and principles of the disclosure shall be included in the protection scope of the disclosure.

## Claims

1. A wireless communication method, performed by a terminal, comprising:
sending a first signaling to a network device, wherein the first signaling comprises a media access control control element (MAC CE), and the MAC CE indicates a global navigation satellite system (GNSS) validity duration of positioning information of the terminal, wherein an identifier (ID) of the first signaling comprises at least one of:
a logical channel ID (LCID); or
an enhanced LCID (eLCID).

2. The method of claim 1, wherein the ID of the first signaling is the LCID, and is one LCID selected from an LCID reserved pool comprising at least one LCID.

3. The method of claim 1, wherein the ID of the first signaling is the eLCID, and is one eLCID selected from an eLCID reserved pool comprising at least one eLCID.

4. The method of any one of claims 1-3, wherein the first signaling comprises a sub header carrying the ID of the first signaling.

5. The method of any one of claims 1-4, wherein the first signaling comprises a sub protocol data unit (PDU) carrying the GNSS validity duration.

6. The method of claim 5, wherein a size of the sub PDU is one byte.

7. The method of claim 6, wherein the GNSS validity duration is represented by at least 4 bits.

8. The method of claim 5, wherein a size of the sub PDU is two bytes.

9. The method of claim 8, wherein the GNSS validity duration is represented by at least 8 bits.

10. The method of any one of claims 1-9, wherein there is a mapping relationship between the GNSS validity duration indicated by the first signaling and an actual GNSS validity duration, and the actual GNSS validity duration is an actual validity duration of the positioning information.

11. The method of any one of claims 1-9, wherein an actual GNSS validity duration is a product of the GNSS validity duration indicated by the first signaling and a first value, and the actual GNSS validity duration is an actual validity duration of the positioning information.

12. The method of any one of claims 1-11, wherein
the first signaling indicates the GNSS validity duration in one of the following ways:
indicating the GNSS validity duration in minutes;
indicating the GNSS validity duration in seconds; and
indicating the GNSS validity duration in milliseconds.

13. The method of any one of claims 1-11, wherein a second part of the GNSS validity duration is indicated by M bits in the first signaling, and a minute part of the GNSS validity duration is indicated by N bits in the first signaling, where M and N are positive integers.

14. The method of claim 13, wherein
the M bits indicate the second part of the GNSS validity duration in steps of integer seconds; or,
the M bits indicate the second part of the GNSS validity duration in steps of fractional seconds.

15. The method of claim 13 or 14, wherein
the N bits indicate the minute part of the GNSS validity duration in steps of integer minutes; or,
the N bits indicate the minute part of the GNSS validity duration in steps of fractional minutes.

16. A wireless communication method, performed by a network device, comprising:
receiving a first signaling from a terminal, wherein the first signaling comprises a MAC CE, and the MAC CE indicates a GNSS validity duration of positioning information of the terminal, wherein an ID of the first signaling comprises at least one of:
an LCID; or
an eLCID.

17. The method of claim 16, wherein the ID of the first signaling is the LCID, and is one LCID selected from an LCID reserved pool comprising at least one LCID.

18. The method of claim 16, wherein the ID of the first signaling is the eLCID, and is one eLCID selected from an eLCID reserved pool comprising at least one eLCID.

19. The method of any one of claims 16-18, wherein the first signaling comprises a sub header carrying the ID of the first signaling.

20. The method of any one of claims 16-19, wherein the first signaling comprises a sub PDU carrying the GNSS validity duration.

21. The method of claim 20, wherein a size of the sub PDU is one byte.

22. The method of claim 21, wherein the GNSS validity duration is represented by at least 4 bits.

23. The method of claim 20, wherein a size of the sub PDU is two bytes.

24. The method of claim 23, wherein the GNSS validity duration is represented by at least 8 bits.

25. The method of any one of claims 16-24, wherein there is a mapping relationship between the GNSS validity duration indicated by the first signaling and an actual GNSS validity duration, and the actual GNSS validity duration is an actual validity duration of the positioning information.

26. The method of any one of claims 16-24, wherein an actual GNSS validity duration is a product of the GNSS validity duration indicated by the first signaling and a first value, and the actual GNSS validity duration is an actual validity duration of the positioning information.

27. The method of any one of claims 16-26, wherein
the first signaling indicates the GNSS validity duration in one of the following ways:
indicating the GNSS validity duration in minutes;
indicating the GNSS validity duration in seconds; and
indicating the GNSS validity duration in milliseconds.

28. The method of any one of claims 16-26, wherein a second part of the GNSS validity duration is indicated by M bits in the first signaling, and a minute part of the GNSS validity duration is indicated by N bits in the first signaling, where M and N are positive integers.

29. The method of claim 28, wherein
the M bits indicate the second part of the GNSS validity duration in steps of integer seconds; or,
the M bits indicate the second part of the GNSS validity duration in steps of fractional seconds.

30. The method of claim 28 or 29, wherein
the N bits indicate the minute part of the GNSS validity duration in steps of integer minutes; or,
the N bits indicate the minute part of the GNSS validity duration in steps of fractional minutes.

31. A wireless communication apparatus, comprising:
a sending module, configured to send a first signaling to a network device, wherein the first signaling comprises a MAC CE, and the MAC CE indicates a GNSS validity duration of positioning information of the terminal, wherein an ID of the first signaling comprises at least one of:
an LCID; or
an eLCID.

32. A wireless communication apparatus, comprising:
a receiving module, configured to receive a first signaling from a terminal, wherein the first signaling comprises a MAC CE, and the MAC CE indicates a GNSS validity duration of positioning information of the terminal, wherein an ID of the first signaling comprises at least one of:
an LCID; or
an eLCID.

33. A communication device, comprising a processor and a memory, wherein the memory stores a computer program, and the processor implements the method according to any one of claims 1-15 or the method according to any one of claims 16-30 by executing the computer program.

34. A computer readable storage medium storing a computer program, wherein when the computer program is executed by a processor, the method according to any one of claims 1-15 or the method according to any one of claims 16-30 is implemented.

35. A chip, comprising a programmable logic circuit and/or a program instruction, wherein when the chip is running, the method according to any one of claims 1-15 or the method according to any one of claims 16-30 is implemented.

36. A computer program product, wherein the computer program product comprises a computer program, the computer program is stored in a computer readable storage medium, and a processor reads the computer program from the computer readable storage medium and executes the computer program to implement the method according to any one of claims 1-15 or the method according to any one of claims 16-30.

37. A communication system, comprising a terminal and a network device, wherein the terminal is configured to implement the method according to any one of claims 1-15, and the network device is configured to implement the method according to any one of claims 16-30.
